# EUROPEAN PATENT APPLICATION

(11) **EP 2 503 493 A2**
(43) Date of publication of application: **26.09.2012**
(21) Application number: 12159002.0
(22) Date of filing: 12.03.2012
(51) Int. Cl.: G06Q 10/08

(54) **Air shipment tracking process**

(30) Priority: 22.03.2011 US 201161466223 P
(71) Applicant: Deutsche Post AG, 53113 Bonn (DE)
(72) Inventor: Josefiak, Frank, 53177 Bonn (DE); Aftabruyan, Hassan, 51069 Köln (DE)
(74) Representative: Jostarndt, Hans-Dieter

(57) **Abstract**

The invention relates to methods for managing the shipment of physical assets between various entities. More particularly, the present invention relates to methods for real-time tracking in logistic chains containing at least one chain link in the logistic chain being air cargo. According to the invention, the method for the tracking of goods in logistic chains, whereby the goods are sent from a sender to a receiver, using a telematics apparatus for sending at least location information to a central relay, from where such information is monitored by a logistics service firm and provided in a members area of a communication network to a customer, comprises the steps of:
logistics service firm chooses telematics apparatus with integrated global positioning receiver and parameterizes it due to customer demands;
sender connects the telematics apparatus with the goods to send;
the logistics service firm gives the log in information to the customer the customer logs in the members area of the communication network and checks whether or not at least location data from the telematics apparatus is sent, while the monitoring service of the logistics service firm starts;
sender puts the package in usual transportation
regularly shipping of the shipment, thereby being loaded in an aircraft the telematics apparatus deactivates the radio communication,
air transportation of the shipment until landing and unloading of the shipment the telematics apparatus reactivates the radio communication and sends all data collected during the flight.

## Description

### BACKGROUND OF THE INVENTION

The invention relates to methods for managing the shipment of physical assets between various entities. More particularly, the present invention relates to methods for real-time tracking in logistic chains containing at least one chain link in the logistic chain being air cargo.

In usual logistic chains, several methods of shipment are combined. In a typical logistic chain, goods are packed by a customer of a logistic service firm or by the logistic service firm itself, are carried to a logistic center by truck, shipped to a seaport or airport by train, transported further by ship or aircraft, again shipped further by train or truck to the next logistic center, and at least carried to the recipient by truck or van.

For long time there was only one possibility for achieving status information of shipments by receiving delivery receipts as paper files after deliverance of the shipment. Unfortunately, much of the paperwork required to maintain the accuracy of the record, was often either missing, late, or erroneously completed. One method far enhancing the ability of shippers to maintain accurate records, involves the placement of unique computer-readable identification codes, e.g., bar codes, on each product shipment. By scanning in these codes at various waypoints during delivery, a record of the shipment process may be maintained. This information may then be forwarded to a shared database for subsequent access by authorized parties. Unfortunately, this process; requires the affirmative step of locating and scanning in each identification code in a timely manner.

Alternatively, electronic container tracking methodologies have been developed which monitor shipments more automatically. Such systems may utilize sophisticated GPS (Global Positioning Satellite) systems for example. The data are recorded in the system, and authorized persons may read these data. Unfortunately, just like the code scanning systems described above, such systems likewise fail to provide information regarding the status of the delivered goods. For example, in a typical shipment of goods transaction, a carrier may know from a tracking system that a container has reached the recipient, but does not know if the container includes damaged or otherwise unacceptable goods because of arisen extreme temperature during shipment for instance.

To overcome such disadvantages, tracking systems have been invented, which consist of sensors and telematics services for in time monitoring locations and conditions inside of containers.

For global communication from the container to a central communication relay, such tracking systems use mobile radio communication, such as GSM or satellite transmission.

Unfortunately, such tracking systems cannot be used in air fright situations. Due to security reasons, all radio communication has to be shut off in airplanes. Therefore, the advantages of electronic container tracking methodologies cannot be used in case at least one chain link in the logistic chain contains of air cargo. Due to the same reason, even GPS systems cannot be used in such case.

### SUMMARY OF THE INVENTION

The objective of the invention is to provide a method for the tracking of goods in logistic chains containing at least one chain link in the logistic chain being air cargo.

According to the invention, this objective is achieved by a method having the features of the independent Claim 1. Advantageous refinements of the method are set forth in the subordinate Claims 2 through 26.

According to the invention, the method for the tracking of goods in logistic chains, whereby the goods are sent from a sender to a receiver by a logistics service firm acting on behalf of a customer, using a telematics apparatus for sending at least location information to a central relay, from where such information is monitored by the logistics service firm and provided in a members area of a communication network to the customer, comprises the steps of: logistics service firm chooses telematics apparatus with integrated global positioning receiver and parameterizes it due to customer demands;
sender connects the telematics apparatus with the goods to send, so that the telematics apparatus essentially has the same position than the goods to send, whereby the telematics apparatus starts with a continuous sending of data via radio communication;
the logistics service firm gives the log in information to the customer
the customer logs in the members area of the communication network and checks whether
or not at least location data from the telematics apparatus is sent, while the monitoring service of the logistics service firm starts;
forwarding of the shipment using several means of transportation, whereby at least one is an aircraft;
the telematics apparatus recognizes the presence of an aircraft when being loaded in the aircraft and deactivates the radio communication;
air transportation of the shipment until landing and unloading of the shipment;
the telematics apparatus reactivates the radio communication and sends all data collected during the flight.

The advantage of the method according to the invention and of the appertaining device for carrying out the method lies in the effective and reliable monitoring of the shipment, even if at least one chain link in the logistic chain is the transportation of the shipment via aircraft.

In accordance with one embodiment of the present invention, the logistics service firm ships the telematics apparatus inclusive documentation containing a log in code to a sender.

In accordance with a second embodiment of the present invention, the sender receives the telematics apparatus and unpacks it, thereby the apparatus starts automatically.

In accordance with a further embodiment of the present invention, the connection of the telematics apparatus with the goods to send is done by putting the telematics apparatus in the package of the goods to send.

In accordance with a further embodiment of the present invention, it is possible that the sender, to whom the logistics service firm has shipped the telematics apparatus, combines a couple of packages from at least one customer in at least one shipment container and puts the telematics apparatus in the same shipment container. Such container may be an air fright pallet, whereby the load on the air fright pallet is secured by a canvas cover featuring a pouch. The telematics apparatus can be put in the pouch of the canvas cover. In another embodiment of the present invention, the at least one shipment container is an unit load device.

Further in the present invention it is provided, that the logistics service firm ships the documentation of the telematics apparatus containing a log in code to the at least one customer. In a further embodiment of the present invention, the telematics apparatus sends an alert to the central relay in case the telematics apparatus reaches a predefined location. Such alert can be sent in case the telematics apparatus has at least one sensor available and the sensor registers a violation of a predefined limit.

The alerts can be sent via all convenient radio communication, such as SMS, electronic mail, General Packet Radio Service (GPRS) or satellite radio communication for instance.

In a further embodiment of the present invention, the alert is forwarded to the sender, who can take action in order to rebuilt nominal conditions subsequently.

In another further embodiment of the present invention, the receiver sends the telematics apparatus back to a predefined address after having received the shipment. It may be provided, that the telematics apparatus switches off when being unloaded. The receiver can use an addressed mailing bag, which was shipped together with the shipment, for back sending of the telematics apparatus.

In another embodiment of the present invention, the telematics apparatus remains in the unit load device. The unit load device can be characterized as disposable after being unloaded. The telematics apparatus may send it's location in a predefined interval, so that the location of the unit load device is known in such intervals.

In a last embodiment of the present invention, the method further comprises the transportation from an airport to the recipient via ground transportation or water carriage.

The sender in the previous described embodiments may be the customer. It is possible as well, that the sender is a service provider, acting on behalf of the logistics service firm or that the sender is a department of the logistics service firm.

Additional advantages, special features and practical refinements of the invention can be gleaned from the subordinate claims and from the presentation below of preferred embodiments making reference to the figures.

The figures show the following:
Figure 1 a first embodiment of the method according to the present invention
Figure 2 a second embodiment of the method according to the present invention
Figure 3 a third embodiment of the method according to the present invention

### DETAILED DESCRIPTION OF THE PREFERRRED EMBODIMENTS

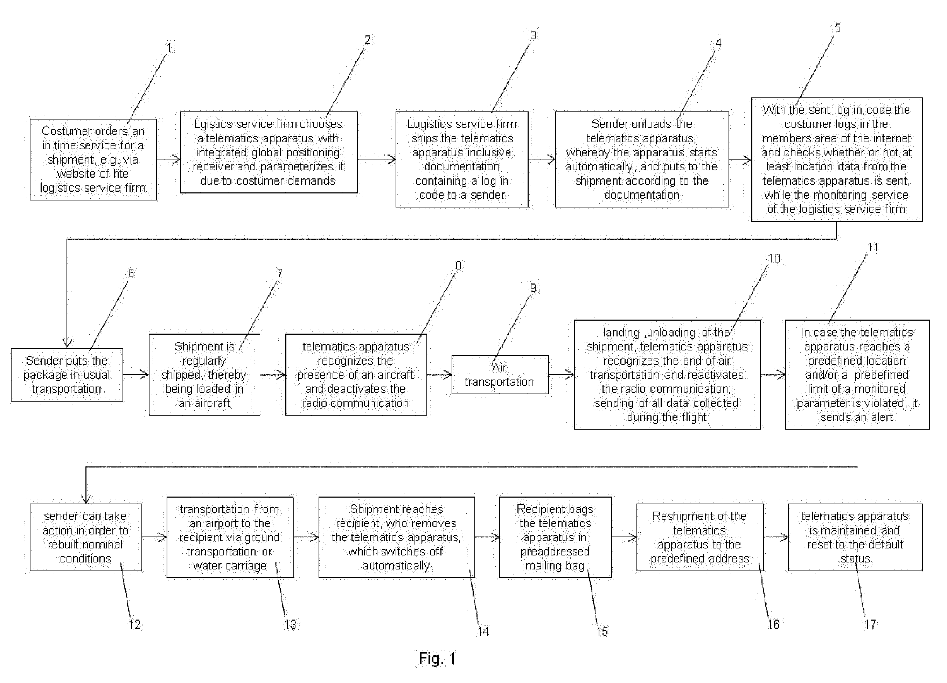

Below a first embodiment of the present invention is described with reference to figure 1.

The method starts with the customer order of an in time service for a shipment 1. This may be done via the website of the logistics service firm for example.

The logistics service firm chooses a telematics apparatus with integrated global positioning receiver and parameterizes it due to customer demands 2.

Afterwards the logistics service firm ships the telematics apparatus inclusive documentation containing a log in code to a sender 3. The sender may be the customer or a service provider, acting on behalf of the logistics service firm. It is also possible that the sender is a department of the logistics service firm. The sender connects the telematics apparatus with the goods to send, so that the telematics apparatus essentially has the same position than the goods to send, whereby the telematics apparatus starts with a continuous sending of data via radio communication 4. With the sent log in code the customer is able to log in the members area of the communication network and to check whether or not at least location data from the telematics apparatus is sent, while the monitoring service of the logistics service firm starts 5.

Subsequently, the shipment is forwarded using several means of transportation, whereby at least one is an aircraft 6, 7;
the telematics apparatus recognizes the presence of an aircraft when being loaded in the aircraft and deactivates the radio communication 8. The recognition can be done by sensors being integral part of the telematics apparatus, which recognize ground radar or flight radar, for example. As an alternative, the location data of all airports are stored in the telematics apparatus, so that it recognizes an airport by comparison of this stored data with the actual position data. After this, the air transportation of the shipment is done until landing and unloading of the shipment, whereby the telematics apparatus recognizes the end of the air transportation by the same means as have been used for the recognition of the presence of an aircraft and reactivates the radio communication, whereupon it sends all data collected during the flight (10).

In case the telematics apparatus reaches a predefined location, it sends an alert to the central relay 11. If the telematics apparatus has at least one sensor available, it can send an alert to the central relay in case the sensor registers a violation of a predefined limit 11, too. These alerts may be sent via short message service as well as via electronic mail. The alert information is forwarded from the central relay to the sender, who can take action in order to rebuilt nominal conditions 12.

Afterwards, the transportation from an airport to the recipient via ground transportation or water carriage 13 is done. The recipient removes the telematics apparatus after having received the shipment. The telematics apparatus switches off when being removed from the shipment 14.

The receiver sends the telematics apparatus back to a predefined address 16, whereby he uses an addressed mailing bag, which was shipped together with the shipment, for back sending of the telematics apparatus to a predefined target address 15, 16. The target address may be a supporting base of the logistics service firm or of a service firm acting on behalf of the logistics service firm. At the target address, the telematics apparatus is maintained and reset to the default status 17.

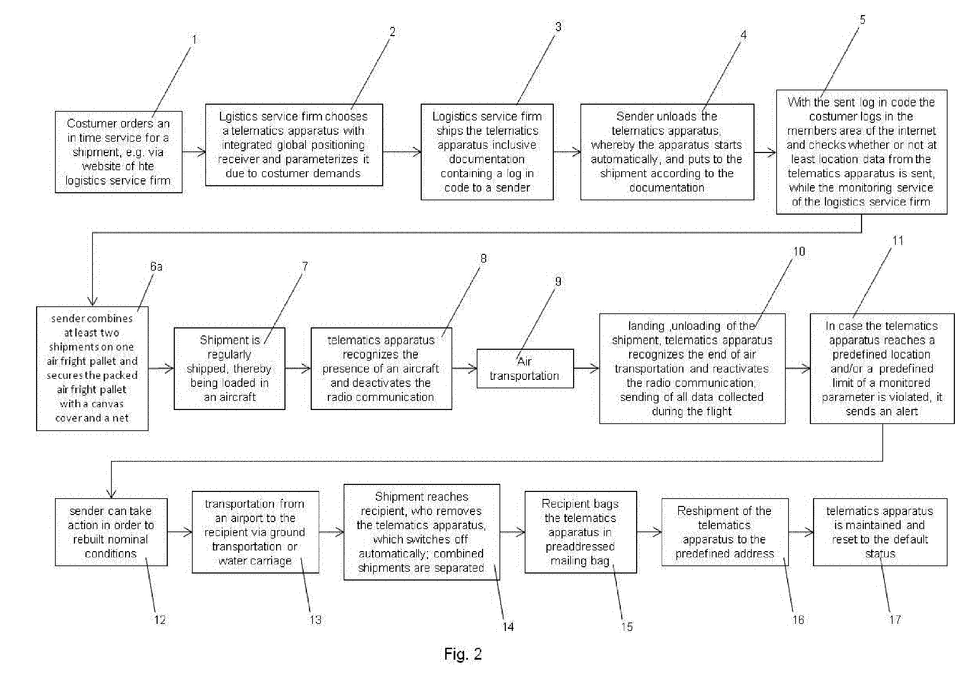

Now a second embodiment of the present invention will be described with the aid of figure 2.

Again, the method starts with the customer order of an in time service for a shipment 1. This may be done via the website of the logistics service firm for example.

The logistics service firm chooses a telematics apparatus with integrated global positioning receiver and parameterizes it due to customer demands 2.

Afterwards the logistics service firm ships the telematics apparatus inclusive documentation containing a log in code to a sender 3. The sender may be the customer or a service provider, acting on behalf of the logistics service firm. It is also possible that the sender is a department of the logistics service firm. In this embodiment it is preferred that the sender is a service provider, acting on behalf of the logistics service firm or a department of the logistics service firm. The documentation including the log in code is sent to the customer. The sender combines the shipment together with other shipments of this customer or of at least one another customer at an air fright pallet, whereby the load on the air fright pallet is secured by a canvas cover featuring a pouch 6a. The sender connects the telematics apparatus with the goods to send by putting the telematics apparatus in the pouch of the canvas cover, so that the telematics apparatus essentially has the same position than the goods to send, whereby the telematics apparatus starts with a continuous sending of data via radio communication 4. With the sent log in code the customer is able to log in the members area of the communication network and to check whether or not at least location data from the telematics apparatus is sent, while the monitoring service of the logistics service firm starts 5.

Subsequently, the sender combines at least two shipments on one air fright pallet and secures the packed air fright pallet with a canvas cover and a net 6a, whereupon the shipment is forwarded using several means of transportation, whereby at least one is an aircraft 6, 7 the telematics apparatus recognizes the presence of an aircraft when being loaded in the aircraft and deactivates the radio communication 8. The recognition can be done by sensors being integral part of the telematics apparatus, which recognize ground radar or flight radar, for example. As an alternative, the location data of all airports are stored in the telematics apparatus, so that it recognizes an airport by comparison of this stored data with the actual position data. Another possibility is the recognition of the radio communication between aircrafts and the tower of the airport. After this, the air transportation of the shipment is done until landing and unloading of the shipment, whereby the telematics apparatus recognizes the end of the air transportation by the same means as have been used for the recognition of the presence of an aircraft and reactivates the radio communication, whereupon it sends all data collected during the flight 10.

In case the telematics apparatus reaches a predefined location, it sends an alert to the central relay 11. If the telematics apparatus has at least one sensor available, it can send an alert to the central relay in case the sensor registers a violation of a predefined limit 11, too. These alerts may be sent via short message service as well as via electronic mail. The alert information is forwarded from the central relay to the sender, who can take action in order to rebuilt nominal conditions 12.

Afterwards, the transportation from an airport to the recipient via ground transportation or water carriage 13 is done. The recipient removes the telematics apparatus after having received the shipment and the combined shipments are separated again. The telematics apparatus switches off when being removed from the shipment 14.

The receiver sends the telematics apparatus back to a predefined address 16, whereby he uses an addressed mailing bag, which was shipped together with the shipment, for back sending of the telematics apparatus to a predefined target address 15, 16. The target address may be a supporting base of the logistics service firm or of a service firm acting on behalf of the logistics service firm. At the target address, the telematics apparatus is maintained and reset to the default status 17.

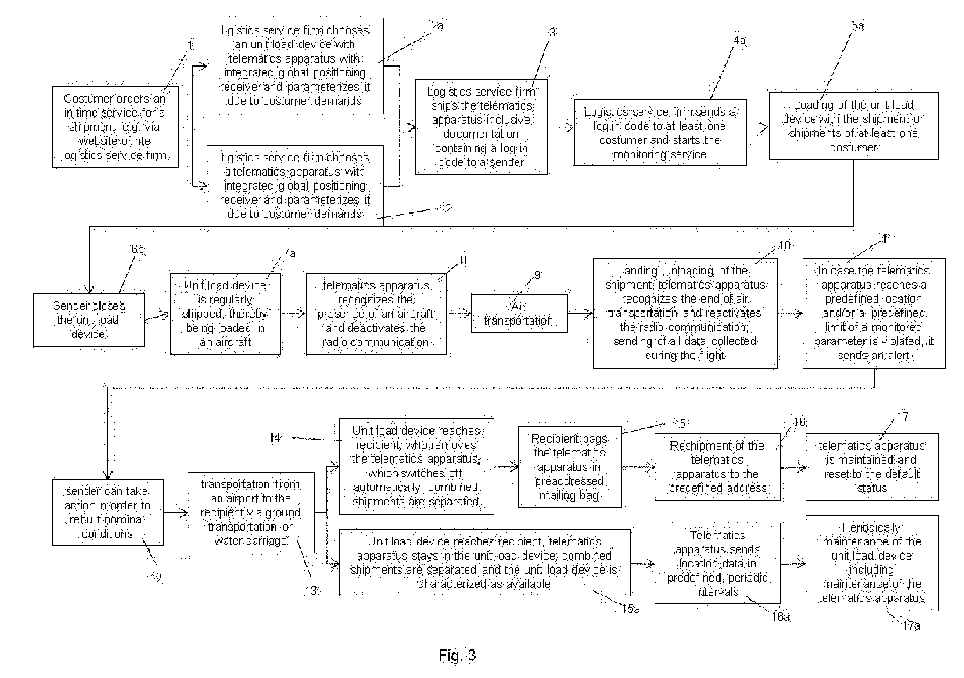

Now a third embodiment of the present invention will be described with the aid of figure 3.

The method of this embodiments starts with the customer order of an in time service for a shipment 1 as well. Again, this may be done via the website of the logistics service firm for example.

The logistics service firm chooses an unit load device, in which a telematics apparatus with integrated global positioning receiver is integrated and parameterizes it due to customer demands 2a, 3. As an alternative it is possible that the logistics service firm chooses and parameterizes a telematics apparatus with integrated global positioning receiver and puts it to the shipment of goods to be sent or ships it to the customer 2b, 3.

Afterwards the logistics service firm mails the log in code to the customer or the customers 4a. The sender may be the customer or a service provider, acting on behalf of the logistics service firm. It is also possible that the sender is a department of the logistics service firm. In this embodiment again it is preferred that the sender is a service provider, acting on behalf of the logistics service firm or a department of the logistics service firm. The sender combines the shipment together with other shipments of this customer or of at least one another customer in an unit load device 5a. The unit load device is closed 6b. With the sent log in code the customer is able to log in the members area of the communication network and to check whether or not at least location data from the telematics apparatus is sent, while the monitoring service of the logistics service firm starts 5a.

Subsequently, the shipment is forwarded using several means of transportation 7a, whereby at least one is an aircraft 6, 7; the telematics apparatus recognizes the presence of an aircraft when being loaded in the aircraft and deactivates the radio communication 8. The recognition can be done by sensors being integral part of the telematics apparatus, which recognize ground radar or flight radar, for example. As an alternative, the location data of all airports are stored in the telematics apparatus, so that it recognizes an airport by comparison of this stored data with the actual position data. It is also possible that the radio communication is switched off when the load with the telematics apparatus is reloaded. Therefore the telematics apparatus may have means for detecting special signals sent by the transportation means, such as RFID for example. It is imaginable that the transportation means for shipping the shipment to an airport, a freight vehicle e.g., sends an RFID signal. The telematics apparatus sends data via radio communication as long as it receives the RFID signal. In case the shipment with the telematics apparatus is unloaded, the telematics apparatus stops receiving the RFID signal and therefore switches off the radio communication until it receives such signal again, after landing and being reloaded in another freight vehicle e.g.. Also a vice versa process is imaginable in the form that the cargo aircraft sends such signal and the telematics apparatus switches off all radio communication in case such signal is received and restarts the radio communication when such signal is not received any more.

After being loaded in an aircraft and all radio communication is switches off, the air transportation of the shipment is done until landing and unloading of the shipment, whereby the telematics apparatus recognizes the end of the air transportation by the same means as have been used for the recognition of the presence of an aircraft and reactivates the radio communication, whereupon it sends all data collected during the flight 10.

In case the telematics apparatus reaches a predefined location, it sends an alert to the central relay 11. If the telematics apparatus has at least one sensor available, it can send an alert to the central relay in case the sensor registers a violation of a predefined limit 11, too. These alerts may be sent via short message service as well as via electronic mail. The alert information is forwarded from the central relay to the sender, who can take action in order to rebuilt nominal conditions 12.

Afterwards, the transportation from an airport to the recipient via ground transportation or water carriage 13 is done. The recipient removes the telematics apparatus after having received the shipment and the combined shipments are separated again. The telematics apparatus switches off when being removed form the shipment 14.

The receiver sends the telematics apparatus back to a predefined address 16, whereby he uses an addressed mailing bag, which was shipped together with the shipment, for back sending of the telematics apparatus to a predefined target address 15a, 16. The target address may be a supporting base of the logistics service firm or of a service firm acting on behalf of the logistics service firm. At the target address, the telematics apparatus is maintained and reset to the default status 17.

In an alternative embodiment, the telematics apparatus stays in the unit load device, while the unit load device is characterized as disposable after being unloaded (15b). The telematics apparatus sends it's location in a predefined interval to the central relay (16a). Maintenance of the telematics apparatus is done during a periodical maintenance of the unit load device 17a.

### List of reference numerals

- 1: customer order
- 2, 2a: Consulting
- 3: packing and shipment of the telematics apparatus
- 4: unloading and starting of the telematics apparatus
- 4a: sending of log in code
- 5: log in
- 5a: loading of unit load device
- 6: preparation of shipment of goods to send
- 6a: combination of shipments
- 6b: closing of unit load device
- 7: shipment of goods to send
- 7a: shipment of unit load device
- 8: switching from live to passive mode
- 9: air cargo
- 10: landing of aircraft
- 11: alert sending
- 12: action taken by the sender
- 13: shipment
- 14: unloading of the telematics apparatus
- 15: preparation of sending back of the telematics apparatus
- 15a: characterization of unit load device
- 16: reshipment of the telematics apparatus
- 16a: sending of location
- 17: telematics apparatus reaches target location
- 17a: maintenance of telematics apparatus

## Claims

1. Method for the tracking of goods in logistic chains, whereby the goods are sent from a sender to a receiver by a logistics service firm, acting on behalf of a customer, using a telematics apparatus for sending at least location information to a central relay, from where such information is monitored by the logistics service firm and provided in a members area of a communication network to the customer,
comprising the steps of:
logistics service firm chooses telematics apparatus and parameterizes it due to customer demands known from a customer order (2);
sender connects the telematics apparatus with the goods to send, so that the telematics apparatus essentially has the same position than the goods to send, whereby the telematics apparatus starts with a continuous sending of data via radio communication (4);
the logistics service firm gives the log in information to the customer (3);
the sender logs in the members area of the communication network and checks whether or not at least location data from the telematics apparatus is sent, while the monitoring service of the logistics service firm starts (5);
forwarding of the shipment using several means of transportation, whereby at least one is an aircraft (6), (7);
the telematics apparatus recognizes the presence of an aircraft when being loaded in the aircraft and deactivates the radio communication (8);
air transportation of the shipment (9) until landing and unloading of the shipment (9); the telematics apparatus recognizes the absence of the aircraft, reactivates the radio communication and sends all data collected during the flight (9).

2. The method of claim 1, wherein the logistics service firm ships the telematics apparatus inclusive documentation containing a log in code to a sender (3).

3. The method of claim 2, wherein the sender receives the telematics apparatus and unpacks it, thereby the apparatus starts automatically (4).

4. The method of claim 3, wherein the connection of the telematics apparatus with the goods to send is done by putting the telematics apparatus in the package of the goods to send (4).

5. The method of claim 1, wherein the logistics service firm ships the telematics apparatus to a sender, whereby the sender combines a couple of packages from at least one customer in at least one shipment container and puts the telematics apparatus in the same shipment container (6).

6. The method of claim 5, wherein the one shipment container is an air fright pallet, whereby the load on the air fright pallet is secured by a canvas cover featuring a pouch (6a).

7. The method of claim 6, wherein the telematics apparatus is put in the pouch of the canvas cover (4).

8. The method of claim 5, wherein the at least one shipment container is an unit load device (5).

9. The method of claim 4, wherein the logistics service firm ships the documentation of the telematics apparatus containing a log in code to the at least one customer (3).

10. The method of one or more of the previous claims,
**characterized in**
**that** the telematics apparatus sends an alert to the central relay in case the telematics apparatus reaches a predefined location (11).

11. The method of one or more of the previous claims,
**characterized in**
**that** the telematics apparatus has at least one sensor available and sends an alert to the central relay in case the sensor registers a violation of a predefined limit (11).

12. The method of one of the claims 10 or 11,
**characterized in**
**that** the alert is sent via short message service (11).

13. The method of one of the claims 10 or 11,
**characterized in**
**that** the alert is sent via electronic mail (11).

14. The method of one of the claims 10 to 13, further comprising forwarding of the alert to the sender.

15. The method of claim 14, further comprising a reaction of the sender in order to rebuilt nominal conditions (12).

16. The method of one or more of the previous claims, further comprising the removal of the telematics apparatus by the receiver after having received the shipment (14).

17. The method of claim 16,
**characterized in**
**that** the telematics apparatus switches off when removed form the shipment (14).

18. The method of one of the claims 16 or 17, further comprising
the receiver sends the telematics apparatus back to a predefined address (16).

19. The method of claim 18,
**characterized in**
**that** the receiver uses an addressed mailing bag, which was shipped together with the shipment, for back sending of the telematics apparatus (15).

20. The method of claims 8 to 15, whereby the telematics apparatus remains in the unit load device (15a).

21. The method of claim 20, wherein the unit load device is characterized as disposable after being unloaded (15b).

22. The method of claim 21, wherein the telematics apparatus sends it's location in a predefined interval (16a).

23. The method of one of the previous claims, further comprising the transportation from an airport to the recipient via ground transportation or water carriage (13).

24. The method of one of the claims 1 to 4 and 9 to 22, wherein the sender is the customer.

25. The method of one of the claims 1 to 22, wherein the sender is a service provider, acting on behalf of the logistics service firm.

26. The method of one of the claims 1 to 22, wherein the sender is a department of the logistics service firm.
